# EUROPÄISCHE PATENTSCHRIFT

(11) **EP 0 731 877 B1**
(45) Veröffentlichungstag und Bekanntmachung des Hinweises auf die Patenterteilung: **21.10.1998**
(21) Anmeldenummer: 95900652.9
(22) Anmeldetag: 17.11.1994
(51) Int. Cl.: F02F 3/22, F16J 1/08

(54) **VERBRENNUNGSMOTOR**
INTERNAL COMBUSTION ENGINE
MOTEUR A COMBUSTION INTERNE

(30) Priorität: 01.12.1993 DE 4340891
(43) Veröffentlichungstag der Anmeldung: 18.09.1996
(73) Patentinhaber: MAHLE GMBH, D-70376 Stuttgart (DE)
(72) Erfinder: KLING, Jürgen, D-71296 Heimsheim (DE); STOLL, Klaus, D-73269 Hochdorf (DE)
(86) Internationale Anmeldenummer: DE9401375
(87) Internationale Veröffentlichungsnummer: WO9515433

(56) Entgegenhaltungen:
- EP-A- 0 359 932
- DE-B- 1 191 176
- FR-A- 2 458 685
- GB-A- 1 117 610

## Beschreibung

Die Erfindung betrifft einen Verbrennungsmotor mit mindestens einer im Motorgehäuse angeordneten Kühlölspritze und mindestens einem Hubkolben aus insbesondere Leichtmetall nach dem Oberbegriff des Patentanspruchs 1.

Eine solche Anordnung ist aus SU-973900 bekannt. Bei dem dortigen Kolben sind die Zu- und Ablauföffnungen jeweils in Umfangsrichtung des Ringkanals langgestreckte Öffnungen. Diese langgestreckten Öffnungen sollen den gesamten zwischen den angrenzenden Naben des Kolbens liegenden Bereich ausfüllen, um möglichst lang sein zu können. Die langgestreckte Form der Zulauföffnung soll dazu dienen, den einzuspritzenden Kühlölstrahl während der Hubbewegung des Kolbens auf verschiedene Bereiche des Kolbenkopfes auftreffen lassen zu können. Zu diesem Zweck wird das Kühlöl durch eine Kühlölspritze vom Kurbelraum aus schräg an den Kolbenkopf gespritzt. Durch die Hubbewegung des Kolbens führt eine solche schräge Kühlöleinleitung dazu, daß der Auftreffpunkt während der Hubbewegung des Kolbens über die gesamte Längserstreckung der Zufuhröffnung wandert. Offensichtlich aus Symmetriegründen weist die das Kühlöl aus dem Kühlölringkanal abführende Ablauföffnung die gleiche Form wie die Zufuhröffnung auf.

Nachteilig bei einem solchen Kolben ist es, daß dieser wegen der großen Zu- und Ablauföffnungen, die sich auf Druckund Gegendruckseite des Kolbens jeweils über den gesamten zwischen den Kolbennaben liegenden Bereich erstrecken, bei einer hohen Belastung des Kolbens keine ausreichende Festigkeit gewährleistet. Des weiteren kann mit einer solchen Ausführung keine gute Kühlwirkung durch das in dem Kühlkanal zirkulierende Kühlöl erreicht werden. Denn für eine gute Kühlwirkung ist eine kontinuierlich vorhandene Teilfüllung des Kühlölringkanales notwendig. Eine solche Teilfüllung des Ringkanalraumes setzt jedoch eine relativ kleine Abflußöffnung voraus.

Hiervon ausgehend beschäftigt sich die Erfindung mit dem Problem, bei dem gattungsgemäßen Verbrennungsmotor die Zu- und Ablauföffnungen des Kühlölringkanales des Hubkolbens so zu verändern, daß einerseits eine optimale Kühlwirkung durch das in dem Ringkanal zirkulierende Kühlöl erreicht wird und daß andererseits eine für eine hohe Kolbenbelastung ausreichende Festigkeit des Kolbens gewährleistet ist.

Eine Lösung hierzu zeigt ein gattungsgemäßer Kolben mit den kennzeichnenden Merkmalen des Anspruchs 1 auf.

Die erfindungsgemäße Lösung ermöglicht es, von einem schräg eingespritzten Kühlölstrahl den größten Teil in den Kühlölringkanal einführen zu können. Hierbei ist die trichterförmige Ausführung der Zufuhröffnung in den Kühlölringkanal von besonderer Bedeutung.

Schräg gerichtete Kühlölstrahlen werden beispielsweise absichtlich bei Motoren mit Kolben eingesetzt, die keinen geschlossenen Kühlölringkanal haben und bei denen der Kühlölstrahl direkt in den Zenitbereich des Kolbenschaftinneren gerichtet ist. Durch die schräge Ausrichtung des Kühlölstrahles trifft dieser bedingt durch die Hubbewegung des Kolbens an jeweils unterschiedlichen Stellen des vorgenannten Zenitbereiches auf. Bei Kolben ohne geschlossenem Kühlölringkanal wird dieser Umstand ausgenutzt, um durch schräg eingespritztes Kühlöl die beiden gegenüberliegenden Naben des Kolbenschaftes jeweils bei unterschiedlichen Hubstellungen des Kolbens direkt anspritzen und dadurch besonders gut kühlen zu können. In manchen Fällen ist es erwünscht, in einem gleichen Motorgehäuse, d. h. bei gleicher Anordnung der Kühlölspritze, für in der Leistung unterschiedliche Motoren einmal Kolben mit und einmal solche ohne Kühlölringkanäle einzusetzen. Eine solche Austauschbarkeit ist bei Kolben mit einer erfindungsgemäß ausgebildeten Kühlölzufuhröffnung ohne weiteres möglich. Dies ist ein erheblicher wirtschaftlicher Vorteil.

Aus Festigkeitsgründen soll die Länge der Zufuhröffnung in Ringkanalrichtung möglichst gering sein, so daß hier zwischen Festigkeit und möglichst großer in den Kühlkanal führender Zufuhröffnung ein Kompromiß gefunden werden muß.

Aus Festigkeitsgründen und um im Motorbetrieb jeweils eine Teilfüllung des Kühlölringkanales mit Kühlöl sicherzustellen, soll der Öffnungsquerschnitt der Ablauföffnung etwa maximal ein Drittel der Öffnungsquerschnittsfläche der Zufuhröffnung messen.

Aus der DE-AS 1 191 176 ist noch ein Kolben bekannt, bei dem die Kühlölkanäle durch Bohrungen, die windschief zur Kolbenachse verlaufen gebildet sind, wobei jeweils zwei Bohrungen im Zenit miteinander in Verbindung stehen. Ein Kühlölringkanal wie beim Gegenstand der Erfindung wird durch die Bohrungen nicht gebildet. Durch die Bohrungen wird sowohl der Schaft als auch der Kolbenkopf geschwächt.

An der Stelle, wo die Bohrungen schräg ineinander laufen entsteht ein scharfer Grat. Auch die Wirkungsweise dieser Kühlölkanäle weicht aufgrund der Höhenunterschiede in deren Verlauf von der des Erfindungsgegenstands ab. Eine kontinuierliche Teilfüllung während des Motorbetriebs und ein daraus resultierender Shaker-Effekt mit einer entsprechend guten Wärmeabfuhr ist nicht zu erwarten. Die Möglichkeit einer optimalen Positionierung der Kühlkanäle relativ zu den zu kühlenden Flächen ist außerdem stark eingeschränkt, da durch Bohren nur gerade Kühlkanäle herstellbar sind.

Ein Ausführungsbeispiel der Erfindung - ohne Darstellung des Motors - ist in der Zeichnung dargestellt.

Es zeigen
- Fig. 1: einen Längsschnitt durch einen Kolben,
- Fig. 2: eine Ansicht des Kolbens von unten,
- Fig. 3: einen Teil-Schnitt durch einen Kolben nach Linie III-III in Fig. 2.

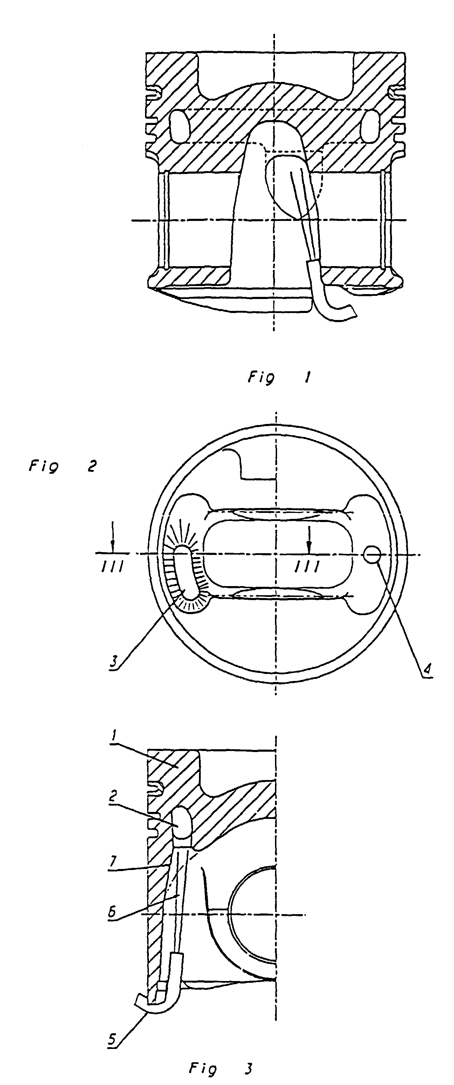

Ein Leichtmetall-Kolben 1 ist in seinem Kolbenkopfbereich mit einem geschlossenen Kühlölringkanal 2 versehen. Dieser Kanal ist mit einer Zufuhröffnung 3 und einer Ablauföffnung 4 versehen.

Zur Einführung von Kühlöl in die Zufuhröffnung 3 ist eine Ölspritze 5 fest an dem Motorgehäuse im oberen Bereich des Motor-Kurbelraumes angeordnet. Der die Kühlölspritze verlassende Kühlölstrahl 6 ist auf die Zufuhröffnung 3 ausgerichtet.

In die Kolbenschaftinnenkontur geht der Querschnitt der Zufuhröffnung 3 trichterförmig über. Dieser Trichterbereich 7 ist so ausgebildet, daß er stufenlos in den radialen Schaftinnenbereich einläuft. Insgesamt ist die Kolbeninnenkontur in einer durch den Öffnungsbereich der Zufuhröffnung 3 gelegten Radialebene bogenförmig ausgebildet. Dadurch ergibt sich ein praktisch vollständig umlaufender Trichterbereich 7, in dem der Kühlölstrahl sehr wirksam aufgefangen werden kann. Insbesondere durch den stufenlosen Übergang des Trichterbereiches 7 in den radialen Schaftinnenbereich wird an die Schaftinnenfläche dort angespritztes Kühlöl durch den Trichterbereich 7 sehr wirksam in die Zufuhröffnung 3 hineingeleitet.

In dem gezeigten Ausführungsbeispiel ist die Kühlölspritze 5 so ausgerichtet, daß der Kühlölstrahl 6 schräg zur Kolbenachse verläuft. Der schräge Verlauf ist dabei derart, wie er zur Kühlung eines Kolbens ohne geschlossenen Kühlölringkanal ausgelegt sein müßte. Bei einer solchen Ausrichtung der Kühlölspritze bereitet das nahezu vollständige Auffangen des Kühlölstrahles innerhalb des Trichterbereiches 7 während sämtlicher Hubstellungen des Kolbens überhaupt keine Schwierigkeiten. Es ist vielmehr so, daß der Kühlölringkanal während sämtlicher Hubstellungen ein gleichmäßiges Füllvolumen mit einem vorbestimmten Füllgrad aufweist, wozu die gegenüber der Zufuhröffnung 3 kleinere Ablauföffnung 4 entscheidend ist.

## Patentansprüche

1. Verbrennungsmotor mit mindestens einer im Motorgehäuse angeordneten Kühlölspritze und mindestens einem Hubkolben aus insbesondere Leichtmetall mit einer Brennraummulde im Kolbenkopf und einem dort vorgesehenen geschlossenen eine Zu- und mindestens eine Ablauföffnung besitzenden Kühlölringkanal, bei dem das Kühlöl durch die fest mit dem Motorgehäuse verbundene Kühlölspritze vom Kurbelraum aus durch den freien Innenraum des Kolbenschaftes hindurch als freier schräg gegenüber der Kolbenachse ausgerichteter Ölstrahl in die Zufuhröffnung des Kühlölringkanales gespritzt wird, wobei im Motorbetrieb eine Teilfüllung des Kühlölringkanals mit Kühlöl vorliegt und die Zufuhröffnung einen in Kolbenumfangsrichtung langgestreckten Öffnungsrand aufweist und diese Öffnung trichterförmig in den Innenwandbereich des Kolbenschaftes ausläuft, **gekennzeichnet** durch folgende eine hohe Belastbarkeit des Kolbens gewährleistenden Merkmale:
a) die in Umfangsrichtung des Kühlölringkanales (2) liegende Länge der Zufuhröffnung (3) ist geringfügig kürzer als es für ein direktes Auffangen des Ölstrahles in allen Hubstellungen des Kolbens notwendig wäre,
b) die Zufuhröffnung (3) grenzt direkt an eine von zwei gegenüberliegenden einen Kolbenbolzen aufnehmenden Naben des Kolbens an,
c) die Gesamtlänge der Zufuhröffnung (3) beträgt maximal zwei Drittel des Umfangsabstandes zwischen den Naben des Kolbens,
d) die Ablauföffnung (4) ist rund und besitzt einen Durchmesser, der etwa der radialen Breite des Kühlölringkanales entspricht.

2. Verbrennungsmotor nach Anspruch 1,
dadurch **gekennzeichnet,**
daß der Strömungsquerschnitt der Zufuhröffnung (3) mindestens das Dreifache des Öffnungsquerschnittes der Ablauföffnung (3) mißt.

## Claims

1. Internal-combustion engine with at least one cooling oil syringe arranged in the engine housing and at least one reciprocating piston made, in particular, of light metal with a combustion chamber recess in the piston head and a closed cooling oil annular duct which is provided therein, has one inlet and at least one outlet orifice and in which the cooling oil is injected by the cooling oil syringe rigidly connected to the engine housing from the crank chamber through the free interior of the piston shank as a free oil jet orientated obliquely to the piston axis into the feed orifice of the cooling oil annular duct, wherein the cooling oil annular duct is partially filled with cooling oil when the engine is running and the feed orifice has an elongate orifice rim in the peripheral direction of the piston and this orifice issues in the form of a funnel into the internal wall region of the piston shank, characterized by the following features which permit high loading of the piston:
a) the length of the feed orifice (3) located in the peripheral direction of the cooling oil annular duct (2) is slightly shorter than that required for direct collection of the oil jet in all reciprocating positions of the piston,
b) the feed orifice (3) directly adjoins one of two opposing hubs of the piston which receive a piston pin,
c) the overall length of the feed orifice (3) is at most two thirds of the peripheral spacing between the hubs of the piston,
d) the outlet orifice (4) is round and has a diameter roughly corresponding to the radial width of the cooling oil annular duct.

2. Internal-combustion engine according to claim 1, characterized in that the cross section of flow of the feed orifice (3) is at least three times the orifice cross section of the outlet orifice (3).

## Revendications

1. Moteur à combustion interne ayant au moins un injecteur d'huile de refroidissement disposé dans le carter moteur et au moins un piston en particulier en métal léger avec une cavité de chambre d'explosion dans la tête de piston et, prévu là, un canal annulaire d'huile de refroidissement fermé possédant une ouverture d'admission et au moins une ouverture d'échappement, dans lequel l'huile de refroidissement est injectée par l'injecteur d'huile de refroidissement relié fixement au carter moteur à partir de l'espace vilebrequin dans l'ouverture d'admission du canal annulaire d'huile de refroidissement en passant en tant que jet d'huile libre orienté de façon oblique par rapport à l'axe du piston à travers l'espace intérieur libre de la tige de piston, le canal granulaire d'huile de refroidissement étant rempli partiellement d'huile de refroidissement pendant que le moteur est en fonctionnement et l'ouverture d'admission présentant un bord d'ouverture allongé orienté vers la périphérie du piston et cette ouverture se terminant en forme d'entonnoir dans la zone de la paroi intérieure de la tige de piston, caractérisé par les caractéristiques suivantes assurant une grande stabilité mécanique du piston:
a) la longueur de l'ouverture d'admission (3) située dans la direction de la périphérie du canal annulaire d'huile de refroidissement (2) est légèrement inférieure à ce qu'elle devrait être pour une capture directe du jet d'huile dans toutes les positions de course du piston,
b) l'ouverture d'admission (3) jouxte directement l'un de deux moyeux du piston situés l'un en face de l'autre et recevant un axe de piston,
c) la longueur totale de l'ouverture d'admission (3) est au maximum égale aux deux tiers de la distance circonférentielle entre les moyeux du piston,
d) l'ouverture d'échappement (4) est ronde et possède un diamètre qui correspond environ à la largeur radiale du canal annulaire d'huile de refroidissement.

2. Moteur à combustion interne selon la revendication 1, caractérisé en ce que la section transversale d'écoulement de l'ouverture d'admission (3) mesure au moins trois fois la section transversale de l'orifice de l'ouverture d'échappement (4).
